# EUROPEAN PATENT APPLICATION

(11) **EP 4 810 225 A1**
(43) Date of publication of application: **23.09.2026**
(21) Application number: 24891108.3
(22) Date of filing: 01.10.2024
(51) Int. Cl.: B29C 45/84, B29C 33/20, B29C 33/32, B29C 45/64, B29C 45/80

(54) **INJECTION MOLDING APPARATUS**

(30) Priority: 17.11.2023 JP 2023196165
(71) Applicant: Kosmek Ltd., Kobe-shi, Hyogo 651-2241 (JP)
(72) Inventor: YOSHIDA, Masakazu, Kobe-shi, Hyogo 651-2241 (JP)
(74) Representative: Wenzel Nemetzade Warthmüller Patentanwälte Part mbB
(86) International application number: PCT/JP2024/035179
(87) International publication number: WO 2025/105066

(57) **Abstract**

An injection molding apparatus (70) performs injection molding in a state where a mold is clamped by a magnetic clamp device (1). The injection molding apparatus (70) includes a molding operating device (65) and a molding controller (90). The molding operating device (65) allows preliminary registration of at least one of a clamping force by the magnetic clamp device (1) and an abnormality determination threshold value regarding the clamping force, for each of a plurality of molds. The molding controller (90) controls an injection molding operation. When the mold is clamped by the magnetic clamp device (1), the molding controller (90) performs abnormality determination of the clamping force before the injection molding operation based on the clamping force or the abnormality determination threshold value that is registered and a clamping force measured at a time of clamping.

## Description

### Technical Field

The present invention relates to an injection molding apparatus that performs injection molding while holding a mold on a holding surface using magnetism.

### Background Art

PTL1 discloses an injection molding machine that clamps mold parts by a magnetic clamp device. The magnetic clamp device of PTL1 includes a plurality of magnetic holding units that fix the mold. A magnetic flux applied in the magnetic holding unit at least substantially determines a holding force applied to the mold part.

This magnetic clamp device includes detecting means that detects an operating state of the magnetic clamp device. The detecting means includes a coil that outputs a detection signal corresponding to the applied magnetic flux. The magnetic flux is continuously monitored, and the holding force is continuously calculated based on the monitored magnetic flux. If the level of the magnetic flux or the holding force has not achieved a threshold value, an alarm state is activated.

### Prior-Art Documents

### Patent Literature

PTL1: Japanese Patent Application Publication No. 2005-515080

### Summary of Invention

### Problems to be Solved by Invention

Many injection molding apparatuses including a magnetic clamp device assume that molds of various shapes are detachably mounted. The magnetic flux to be generated by the magnetic clamp device in order to obtain sufficient holding force changes depending on the size of the mold and the like.

In this regard, PTL1 does not describe changing the aforementioned threshold value with replacement of the mold.

The present invention has been made in view of the above circumstances, and an object thereof is to appropriately detect an abnormality regarding holding even when a mold is replaced in an injection molding apparatus that performs injection molding while holding a mold on a holding surface using magnetism.

### Means for Solving Problem and Advantageous Effects

The problems to be solved by the present invention are as described above, and next, means for solving this problem and effects thereof will be described.

According to an aspect of the present invention, an injection molding apparatus having the following configuration is provided. That is, this injection molding apparatus performs injection molding in a state where a mold is clamped by a magnetic clamp device. The injection molding apparatus includes a molding operating device and a controller. The molding operating device allows preliminary registration of at least one of a clamping force by the magnetic clamp device and an abnormality determination threshold value regarding the clamping force, for each of a plurality of molds. The controller controls an injection molding operation. The controller includes a clamp state determiner. The clamp state determiner performs abnormality determination of the clamping force before the injection molding operation based on the clamping force or the abnormality determination threshold value that is registered and a clamping force measured at a time of clamping, when the mold is clamped by the magnetic clamp device.

Thus, an abnormality of the clamping force leading to falling of the mold can be detected before starting injection molding. Since a plurality of clamping forces or abnormality determination threshold values can be registered for each of a plurality of molds, criteria for abnormality determination of the clamping force can be easily changed with replacement of the mold.

In the injection molding apparatus described above, it is preferable to have the following configuration. That is, the molding operating device allows preliminary registration of at least one of the clamping force and the abnormality determination threshold value together with information regarding the mold. The molding operating device is capable of being operated to select a mold to be clamped from the mold preliminarily registered before clamping the mold. The clamp state determiner performs the abnormality determination of the clamping force based on the clamping force or the abnormality determination threshold value stored corresponding to the mold that is selected.

Thus, criteria for abnormality determination of the clamping force can be automatically set by selection of the mold, so that setting mistakes can be prevented.

In the injection molding apparatus described above, it is preferable to have the following configuration. That is, the controller includes a clamping force display. When registering at least one of the clamping force and the abnormality determination threshold value, the magnetic clamp device is made to clamp the mold, and the clamping force display displays a measured value of the clamping force measured while the mold is clamped.

Thus, an operator can set the clamping force or the abnormality determination threshold value for clamping the mold in the injection molding apparatus with reference to the actually measured clamping force. Therefore, criteria for abnormality determination of the clamping force can be appropriately determined.

In the injection molding apparatus described above, it is preferable to have the following configuration. That is, the molding operating device allows preliminary registration of at least one of the clamping force and the abnormality determination threshold value, and a molding condition, together with information regarding the mold. The molding condition includes at least one of a resin temperature, a mold temperature, and a filling pressure.

Thus, the molding condition including criteria for abnormality determination of the clamping force can be registered in an organized form, and the injection molding apparatus can be operated according to the condition.

In the injection molding apparatus described above, it is preferable that the controller includes an alarm unit that generates an alarm when the clamp state determiner determines that the clamping force is abnormal.

Thus, an operator can notice early a situation where an abnormality has occurred in the clamping force.

In the injection molding apparatus described above, it is preferable to have the following configuration. That is, the magnetic clamp device clamps the mold on each of a fixed side and a movable side. The abnormality determination of the clamping force by the clamp state determiner is performed for each of the fixed side and the movable side. When the clamp state determiner determines that the clamping force is abnormal on only one of the fixed side and the movable side, the alarm generated by the alarm unit includes information indicating which of the fixed side and the movable side has an abnormality in the clamping force.

Thus, an operator can easily understand where an abnormality has occurred in the clamping force, on the fixed side or the movable side.

### Brief Description of Drawings

[FIG. 1] FIG. 1 is a front view showing an overall configuration of an injection molding apparatus according to an embodiment of the present invention.
[FIG. 2] FIG. 2 is a schematic diagram showing a release state of a first magnetic plate.
[FIG. 3] FIG. 3 is a schematic diagram showing a lock state of the first magnetic plate.

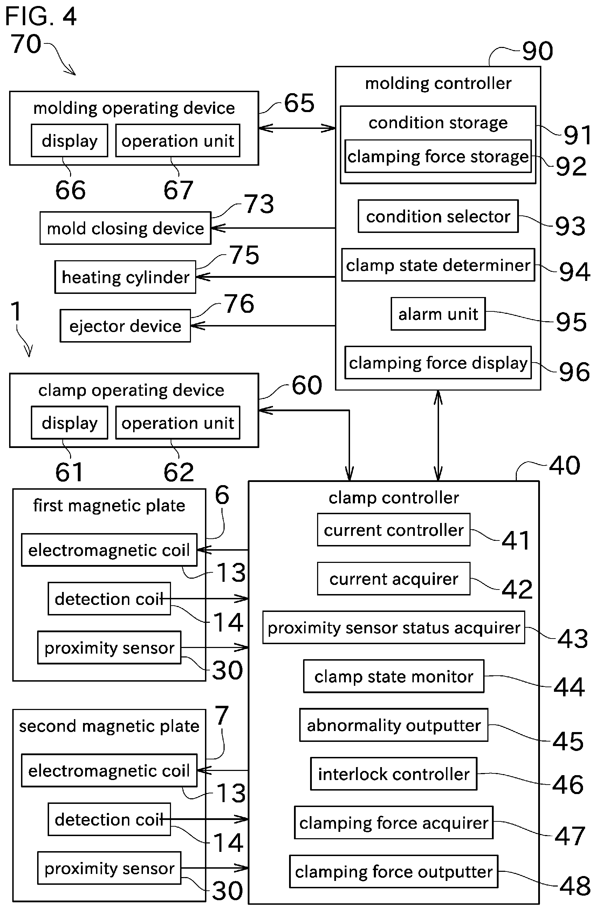

[FIG. 4] FIG. 4 is a block diagram showing an electrical configuration of a magnetic clamp device.
[FIG. 5] FIG. 5 is a diagram showing an example of a screen for setting a clamping force displayed on a molding operating device.
[FIG. 6] FIG. 6 is a diagram showing an example of a screen for selecting a mold to be mounted on the injection molding apparatus from a plurality of molds preliminarily registered.
[FIG. 7] FIG. 7 is a diagram showing an example where a warning message is displayed on a screen.
[FIG. 8] FIG. 8 is a diagram showing an example where a clamping force measured when a clamping operation is performed in a magnetic clamp device is displayed on a screen.

### Embodiments for Carrying out Invention

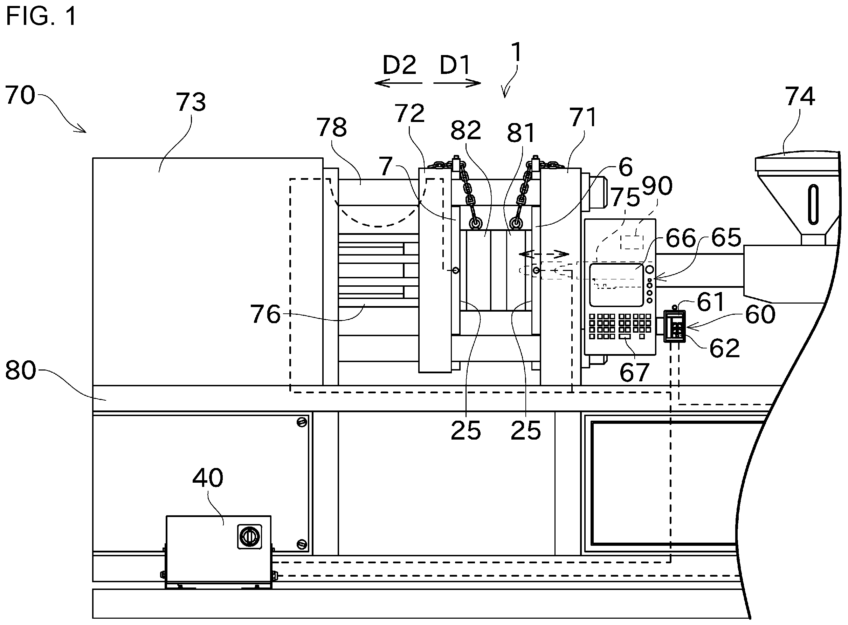

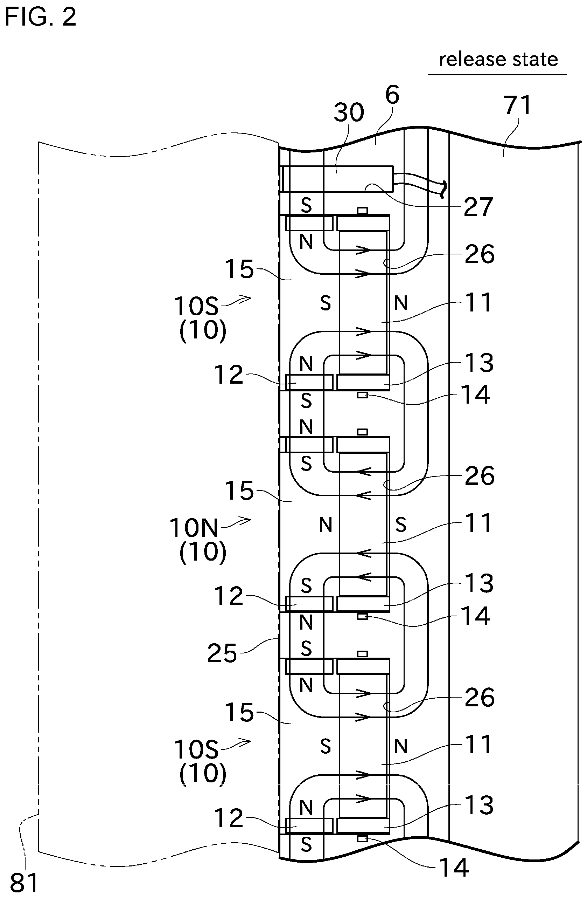

Next, embodiments of the present invention will be described with reference to the drawings. FIG. 1 is a front view showing an overall configuration of an injection molding apparatus 70 according to an embodiment of the present invention. FIG. 2 is a side view showing a configuration of a first magnetic plate 6.

The injection molding apparatus 70 shown in FIG. 1 includes a fixed platen 71, a movable platen 72, a mold closing device 73, a hopper 74, a heating cylinder 75, and an ejector device 76. Furthermore, the injection molding apparatus 70 includes a magnetic clamp device 1. The magnetic clamp device 1 is used to detachably fix a first mold 81 on the fixed platen 71 and a second mold 82 on the movable platen 72, respectively.

The injection molding apparatus 70 includes a main frame 80 formed elongated in a horizontal direction. The fixed platen 71 and the mold closing device 73 are fixed to the main frame 80. The movable platen 72 is supported slidably along a longitudinal direction of the main frame 80 via guide rods 78. The fixed platen 71 and the movable platen 72 are arranged so as to face each other in the longitudinal direction of the main frame 80.

The mold closing device 73 includes an actuator not shown in the drawings. The configuration of the actuator is arbitrary, and for example, it can be a motor or a hydraulic cylinder. The mold closing device 73 can transmit a driving force of the actuator to the movable platen 72 to move the movable platen 72 in a direction approaching the fixed platen 71 and a direction moving away. Hereinafter, a direction in which the movable platen 72 approaches the fixed platen 71 may be called a mold closing direction D1, and a direction moving away from the fixed platen 71 may be called a mold opening direction D2.

The hopper 74 and the heating cylinder 75 are attached to the main frame 80. Granular synthetic resin material serving as a raw material of a molded product can be stored in the hopper 74. A lower end portion of the hopper 74 is connected to the heating cylinder 75. The heating cylinder 75 is formed in a hollow shape. A screw not shown in the drawings is disposed inside the heating cylinder 75.

An actuator not shown in the drawings is connected to the heating cylinder 75. The actuator can move the heating cylinder 75 between a protruded position and a retracted position so as to protrude from the fixed platen 71 toward the movable platen 72 side. In a state where the heating cylinder 75 protrudes from the fixed platen 71, an internal space of the heating cylinder 75 is connected to a not-shown cavity formed inside with the first mold 81 and the second mold 82 closed. The synthetic resin material supplied to the heating cylinder 75 is melted by heating and supplied to the above-mentioned cavity by extrusion of the screw. In this way, the heating cylinder 75 functions as a nozzle that discharges the molten material.

The ejector device 76 removes a molded product from the first mold 81 and the second mold 82 in an opened state after injection molding is completed.

The magnetic clamp device 1 includes a first magnetic plate 6, a second magnetic plate 7, a clamp controller 40, and a clamp operating device 60.

The first magnetic plate 6 is fixed to the fixed platen 71. Similarly, the second magnetic plate 7 is fixed to the movable platen 72. The first magnetic plate 6 and the second magnetic plate 7 are arranged so as to face each other in a moving direction of the movable platen 72.

Each of the first magnetic plate 6 and the second magnetic plate 7 includes a holding surface 25 formed flatly. The first mold 81 and the second mold 82, which are targets of a clamping operation performed by the magnetic clamp device 1, are made of a magnetic material, for example, iron.

The first magnetic plate 6 can switch between a lock state and a release state. In the lock state, magnetic flux is generated on the holding surface 25 of the first magnetic plate 6, and the first mold 81 is held to the holding surface 25 by magnetic force. In the release state, generation of magnetic flux on the holding surface 25 is released, and holding of the first mold 81 is released. Similarly, the second magnetic plate 7 can also switch between the lock state and the release state.

Since the configurations of the first magnetic plate 6 and the second magnetic plate 7 are substantially the same, the configuration of the first magnetic plate 6 will be described as a representative below.

The first magnetic plate 6 is formed in a plate shape. A surface on one side of the first magnetic plate 6 in a thickness direction is fixed to the fixed platen 71, and a planar holding surface 25 is formed on the opposite surface.

The first magnetic plate 6 includes a plurality of magnetic pole elements 10 and a plurality of proximity sensors 30. The plurality of magnetic pole elements 10 are arranged side by side in a grid pattern.

Two types, that is, an N-pole type and an S-pole type of magnetic pole elements 10 are provided on the first magnetic plate 6. The N-pole type means one in which a pole facing the holding surface 25 side in a first magnet 11 described later is an N-pole, and the S-pole type means one in which that pole is an S-pole. The magnetic pole elements 10 are provided on the first magnetic plate 6 so that two magnetic pole elements 10 adjacent in a vertical direction or a horizontal direction become types of opposite poles.

The N-pole type magnetic pole element 10N will be described in detail. As shown in FIG. 2, the N-pole type magnetic pole element 10N includes a first magnet 11, a second magnet 12, an electromagnetic coil 13, a detection coil 14, and a fixing member 15. The first magnet 11, the second magnet 12, the electromagnetic coil 13, the detection coil 14, and the fixing member 15 are all accommodated in a recess 26 formed on the first magnetic plate 6.

The first magnet 11 is configured as a permanent magnet, for example, an Alnico magnet. The first magnet 11 is formed in a disk shape, and its magnetization direction coincides with the thickness direction. In the N-pole type magnetic pole element 10N, the first magnet 11 is arranged such that an N-pole faces the holding surface 25 side and an S-pole faces the opposite side to the holding surface 25.

The second magnet 12 is configured as a permanent magnet, for example, a neodymium magnet. The second magnet 12 is formed in a cylindrical shape, and its magnetization direction coincides with a radial direction. In the N-pole type magnetic pole element 10N, the second magnet 12 is arranged such that an N-pole faces radially outward and an S-pole faces radially inward.

The electromagnetic coil 13 is configured by winding an elongated conductor into a cylindrical shape. The electromagnetic coil 13 is arranged on an outer periphery of the disk-shaped first magnet 11. The electromagnetic coil 13 is arranged side by side with the second magnet 12 in an axial direction of the magnetic pole element 10. The electromagnetic coil 13 is electrically connected to the clamp controller 40 via a cable not shown in the drawings. A magnetic pole of the first magnet 11 can be inverted by passing a current through the electromagnetic coil 13 and applying a field opposite to the magnetization direction possessed by the first magnet 11 with sufficient strength.

The detection coil 14 is configured by winding an elongated conductor into a circular shape. In the present embodiment, the detection coil 14 is arranged on an outer periphery of the electromagnetic coil 13, but the position where it is arranged is not limited to the above. The detection coil 14 detects magnetic flux passing through its interior. The number of windings of the detection coil 14 can be, for example, one time, but may be two or more times. Also, it is not necessary to determine the number of windings of the detection coil 14 to be an integer multiple of one turn, and it can be, for example, 1/2 turn, 5/4 turns, etc.

The fixing member 15 is formed in a substantially cylindrical shape. The fixing member 15 closes an opening of the recess formed on the first magnetic plate 6. The fixing member 15 is arranged adjacent to the first magnet 11 in an axial direction of the magnetic pole element 10.

The proximity sensor 30 is a non-contact type sensor and can be configured as, for example, a known semiconductor switch. Each proximity sensor 30 is arranged so as to be embedded in a recess 27 formed on the first magnetic plate 6. The proximity sensor 30 has an ON state when the first mold 81, which is a detection target, is close to the proximity sensor 30 enough to contact the holding surface 25, and an OFF state otherwise.

In the S-pole type magnetic pole element 10S, magnetization directions of the first magnet 11 and the second magnet 12 are all reversed with respect to the N-pole type magnetic pole element 10N. Except for this point, the configuration of the S-pole type magnetic pole element 10S is the same as that of the N-pole type magnetic pole element 10N.

Next, a release state and a lock state in the first magnetic plate 6 will be described. The release state can be rephrased as a clamp release state, and the lock state can be rephrased as a clamp state.

In the release state, a magnetic circuit in the first magnetic plate 6 is formed as shown in FIG. 2. Specifically, in the release state, no current flows through the electromagnetic coil 13. Therefore, when focusing on a certain N-pole type magnetic pole element 10N, magnetic flux exiting from an N-pole of the first magnet 11 passes through the second magnet 12, then passes through an adjacent S-pole type magnetic pole element 10S in the order of the second magnet 12 and the first magnet 11, and enters an S-pole of the first magnet 11 possessed by the original magnetic pole element 10N. In this way, in the release state, since the magnetic circuit is formed to loop inside the first magnetic plate 6, magnetic flux is not generated on the holding surface 25. Therefore, holding with respect to the first mold 81 is not performed.

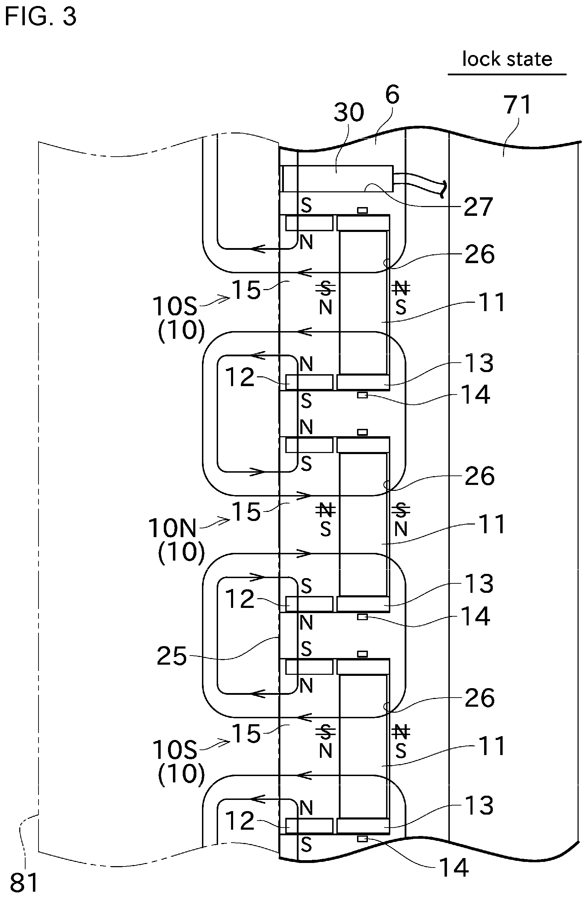

When a current flows through the electromagnetic coil 13 from the state of FIG. 2, the first magnetic plate 6 is switched to a lock state shown in FIG. 3. Specifically, in all magnetic pole elements 10 included in the first magnetic plate 6, polarity of the first magnet 11 is inverted by a direct current flowing through the electromagnetic coil 13. Therefore, the magnetic pole of the surface facing the holding surface 25 side in the first magnet 11 and the magnetic pole of the inner peripheral surface of the second magnet 12 become the same. As a result, when focusing on a certain N-pole type magnetic pole element 10N, magnetic flux starting from an N-pole of the second magnet 12 passes through the second magnet 12 of an adjacent S-pole type magnetic pole element 10S, then passes through the first mold 81, and enters an S-pole of the second magnet 12 which is a departure point. Also, in the same magnetic pole element 10N, magnetic flux exiting from an N-pole of the first magnet 11 in a magnetic pole inverted state passes through the first magnet 11 of an adjacent S-pole type magnetic pole element 10S, then passes through the first mold 81, and enters an S-pole of the first magnet 11 possessed by the original magnetic pole element 10N. In this state, magnetic flux based on the first magnet 11 of the magnetic pole element 10N and magnetic flux based on the second magnet 12 both appear on the holding surface 25. Thereby, the first mold 81 is held to the holding surface 25 by magnetic force. This magnetic force corresponds to a holding force and a clamping force described later.

Once the first mold 81 is held to the holding surface 25, even if current to the electromagnetic coil 13 is stopped, the lock state is stably held by the above-mentioned magnetic field lines. Thereby, energy saving can be realized. To return the first magnetic plate 6 from the lock state to the release state, a direct current opposite to the above may be passed through all electromagnetic coils 13 included in the first magnetic plate 6.

The second magnetic plate 7 sucks and holds the second mold 82 on the holding surface 25 based on the same principle as the first magnetic plate 6. Since the second magnetic plate 7 is configured substantially similarly to the first magnetic plate 6, description thereof will be omitted.

Next, the clamp controller 40 and the clamp operating device 60 will be described.

The clamp controller 40 is configured as a known computer and includes a CPU, ROM, RAM, and the like. The clamp controller 40 is electrically connected to the clamp operating device 60 and a molding controller (controller) 90. The molding controller 90 is a computer that controls each part of the injection molding apparatus 70, and details thereof will be described later.

The clamp controller 40 includes a current controller 41, a current acquirer 42, a proximity sensor status acquirer 43, a clamp state monitor 44, an abnormality outputter 45, and an interlock controller 46.

The current controller 41 controls currents flowing through electromagnetic coils 13 included in the first magnetic plate 6 and the second magnetic plate 7, respectively.

The current acquirer 42 acquires currents flowing through detection coils 14 for each of the first magnetic plate 6 and the second magnetic plate 7. In the detection coil 14, an induced current in a direction hindering changes in passing magnetic flux is generated. The magnitude of the current acquired by the current acquirer 42 is sampled at an appropriate frequency, and an integration calculation is performed. As a result, a change amount of magnetic flux passing through the detection coil 14 can be obtained.

The proximity sensor status acquirer 43 acquires states of proximity sensors 30 included in the first magnetic plate 6 and the second magnetic plate 7, respectively.

The clamp state monitor 44 monitors clamp states of the first magnetic plate 6 and the second magnetic plate 7 based on a current flowing through the detection coil 14 and a state of the proximity sensor 30.

The abnormality outputter 45 outputs an abnormality detection signal to the molding controller 90 when the clamp state monitor 44 detects an abnormality regarding the first magnetic plate 6 and the second magnetic plate 7.

The interlock controller 46 performs interlock control in the magnetic clamp device 1 by exchanging signals between the clamp controller 40 and the molding controller 90, etc.

For example, the interlock controller 46 prohibits a clamping operation and a clamp release operation for the first magnetic plate 6 and the second magnetic plate 7 unless a state indicating that the injection molding apparatus 70 is in a mold closing state is input from the molding controller 90.

For example, the interlock controller 46 prohibits the clamping operation of the magnetic clamp device 1 unless the proximity sensor 30 detects the first mold 81 or the second mold 82 and in the ON state. Thereby, it is possible to prevent a clamping operation from being performed in a state where there is a gap between the holding surface 25 and the first mold 81 or the second mold 82.

A clamping force acquirer 47 acquires holding forces generated on the first magnetic plate 6 and the second magnetic plate 7 based on changes in magnetic flux detected by the detection coil 14. The holding force can be rephrased as a clamping force of the clamp device.

Since the measurement principle of the clamping force is substantially disclosed in PTL1 described above, it will be briefly described below. When magnetic flux φ passing through one detection coil 14 changes, an output voltage ε represented by ε = - N(dφ/dt) is generated in the detection coil 14 according to an electromotive force formula. Here, N is the number of windings of the detection coil 14. By integrating this output voltage ε and dividing by the number of windings N, a change in magnetic flux φ can be estimated. Based on this magnetic flux change and an area of a coil surface of the detection coil 14, a clamping force can be estimated by a known calculation formula.

A plurality of detection coils 14 possessed by a plurality of magnetic pole elements 10 are connected in series to an integrator not shown in the drawings. Before switching from the release state to the lock state, an output of the integrator is set to zero. When transitioning from the release state to the lock state, the integrator outputs a value proportional to a cumulative magnetic flux change generated in the detection coil 14. The clamping force acquirer 47 obtains a clamping force based on an output value of the integrator. In obtaining the clamping force, a theoretical conversion formula may be used, or a conversion table based on experimental values may be used.

A clamping force outputter 48 outputs the clamping force obtained by the clamping force acquirer 47 to the molding controller 90.

The clamp operating device 60 includes a display 61 and an operation unit 62.

The display 61 is configured by, for example, a lamp, a 7-segment LED, or the like. The display 61 can display various information regarding the magnetic clamp device 1.

The operation unit 62 is configured by, for example, a hardware key, a switch, or the like. The operation unit 62 can be operated to instruct the magnetic clamp device 1 to perform various operations.

Next, the molding controller 90 and the molding operating device 65 will be described.

The molding controller 90 includes a condition storage 91, a condition selector 93, a condition selector 93, a clamp state determiner 94, an alarm unit 95, and a clamping force display 96.

In the condition storage 91, a mold ID capable of uniquely identifying a combination of the first mold 81 and the second mold 82 that can be attached to the injection molding apparatus 70, a name registered by a user for that mold, and molding conditions applied when performing injection molding using that mold are stored in association with each other. The name of the mold is an example of information of the mold. The name of the mold can be arbitrarily determined by an operator as long as it is a character string capable of specifying the mold, and for example, a mold part number or the like may be registered. Instead of the name of the mold, a name of a product molded by the mold may be registered.

Molding conditions can be various, and for example, resin temperature, mold temperature, filling pressure, injection speed, holding pressure, injection time, cooling time, measurement position, velocity-holding pressure switching position, screw forward position, screw rotation speed, screw back pressure, mold opening/closing speed, mold closing force, ejector protrusion speed, ejector protrusion force, ejector protrusion count, etc. can be listed.

In the injection molding apparatus 70 of the present embodiment, the molding conditions stored in the condition storage 91 include a clamping force by the magnetic clamp device 1. In other words, the condition storage 91 includes a clamping force storage 92 for storing a clamping force in association with a mold ID. The clamping force is registered for each of the first magnetic plate 6 side and the second magnetic plate 7 side (in other words, the first mold 81 and the second mold 82).

Details will be described later, but in this embodiment, the molding controller 90 calculates an abnormality determination threshold value based on a set clamping force, and when the measured value of the clamping force falls below this abnormality determination threshold value, it is determined that there is an abnormality in the clamping force. Therefore, the value of the clamping force set for the injection molding apparatus 70 substantially functions as a reference value for determining a clamp abnormality.

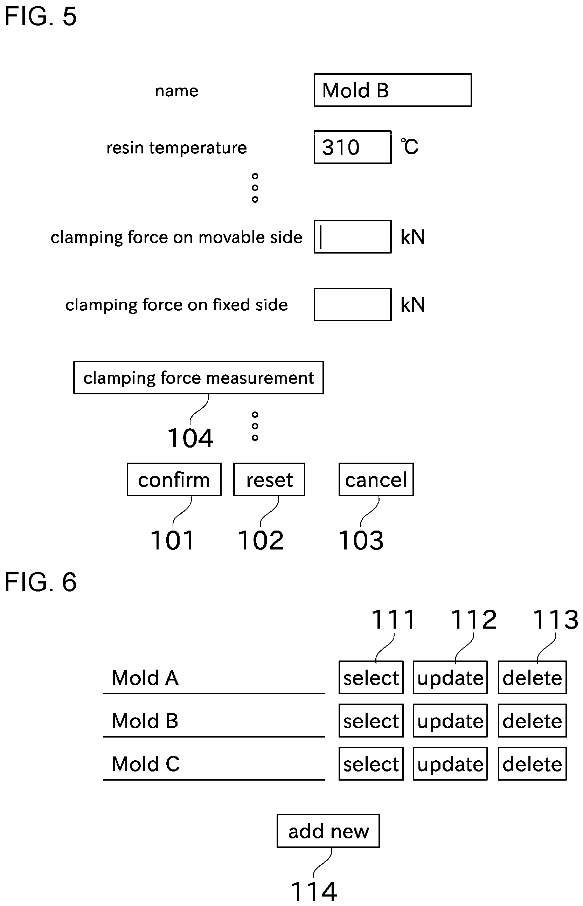

An operator of the injection molding apparatus 70 operates the molding operating device 65 to preliminarily register a mold when attaching a new mold to the injection molding apparatus 70. At this time, the operator inputs the name of the mold, resin temperature, mold temperature, filling pressure, clamping force, and the like. An example of a registration screen is shown in FIG. 5. As shown in FIG. 5, the registration screen includes a confirm button 101, a reset button 102, and a cancel button 103. The confirm button 101 is a button that instructs confirmation of input contents. The reset button 102 is a button that instructs to redo input. The cancel button 103 is a button that instructs cancellation of new registration.

When input is completed and the operator taps the confirm button 101, the molding controller 90 stores the input information in the condition storage 91 in association with a newly issued mold ID. In this embodiment, the name of the mold input by the operator is stored in the condition storage 91. Instead of this, the name of the mold may be stored in another storage.

When using the injection molding apparatus 70 by mounting it while exchanging multiple molds, an operator can preliminarily register a mold name and molding conditions (including clamping force) for each mold in the molding controller 90. FIG. 6 shows a state where three molds with names "Mold A", "Mold B", and "Mold C" are registered in the injection molding apparatus 70.

On the list screen of FIG. 6, a select button 111, an update button 112, and a delete button 113 are displayed for each of the three molds registered so far. The select button 111 is a button that specifies a mold to be mounted. The update button 112 is a button that instructs changes to the name, resin temperature, clamping force, etc. registered for the mold. The delete button 113 is a button that instructs deletion of mold registration.

On this list screen, a new registration button 114 for new registering a mold is displayed. When the new registration button 114 is tapped, new registration of the mold described in FIG. 5 can be performed.

The condition selector 93 accepts selection of one molding condition by an operator from a plurality of molding conditions registered in the condition storage 91. An operator operates the molding operating device 65 to select one mold that is about to be mounted on the injection molding apparatus 70 from molds registered in advance. The operator taps the select button 111 of the row of a corresponding mold (for example, Mold B) from the list of molds displayed on the screen of FIG. 6. Thereby, the molding controller 90 can read molding conditions of the mold before clamping the first mold 81 and the second mold 82.

The clamp state determiner 94 determines whether the first mold 81 and the second mold 82 are clamped with sufficient clamping force when attached to the injection molding apparatus 70. This determination is performed based on a clamping force measured by the magnetic clamp device 1 during attachment of the first mold 81 and the second mold 82, and a clamping force included in molding conditions selected by the condition selector 93.

The clamp state determiner 94 determines that the clamping force is insufficient when the actually measured clamping force is insufficient even with an appropriate margin for the clamping force determined as molding conditions, for example. The margin can be determined appropriately, but for example, it may be considered to be 20% of the determined clamping force.

The alarm unit 95 generates an alarm when the clamp state determiner 94 determines that the clamping force by the magnetic clamp device 1 is insufficient. Forms of the alarm are various, but typically, it is to display a warning message on a display 66 included in the molding operating device 65.

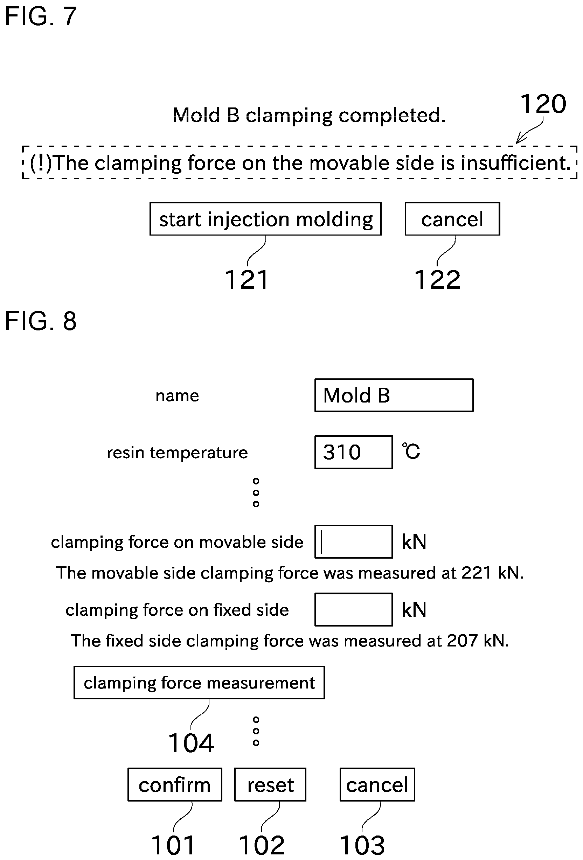

FIG. 7 shows an example of a warning message. FIG. 7 shows an example of a screen displayed on the display 66 in a state where the first mold 81 and the second mold 82 are clamped by the magnetic clamp device 1. When the clamping force falls below the abnormality determination threshold value on only one of the fixed side and the movable side, the warning message 120 includes information specifying where the clamping force shortage occurred, on the fixed side or the movable side, as shown in FIG. 7. When the clamping force falls below the abnormality determination threshold value on both the fixed side and the movable side, that fact is displayed in the warning message 120.

The clamp completion screen shown in FIG. 7 includes an injection molding start button 121 and a cancel button 122. The injection molding start button 121 is a button for instructing start of injection molding. The cancel button 122 is a button for instructing cancellation of injection molding.

A determination timing by the clamp state determiner 94 is before starting injection molding after switching from a release state to a lock state in order to suck the first mold 81 and the second mold 82 using the magnetic clamp device 1. Therefore, when holding of the first mold 81 and the second mold 82 is insufficient for some reason, an operator can notice a situation of clamping force shortage, cancel injection molding, and check the clamp situation before instructing start of the molding operation of the injection molding apparatus 70. As a result, dropping during the molding operation of the first mold 81 and the second mold 82 can be prevented.

The clamping force display 96 can cause a measured value of a clamping force when a mold is clamped by the magnetic clamp device 1 in response to an operator's instruction to be displayed on the display 66 as reference information when an operator registers the clamping force.

The molding operating device 65 includes a display 66 and an operation unit 67.

In this embodiment, the display 66 is configured as a known display device.

The operation unit 67 includes a hardware key and a touch panel provided integrally with the above-mentioned display device. The configuration of the operation unit 67 is not limited to the above, and for example, an appropriate pointing device or the like can be included in the operation unit 67.

Next, a method for setting a clamping force in the injection molding apparatus 70 will be described.

A clamping force included in molding conditions can be set, for example, by an operator operating the operation unit 67 of the molding operating device 65 and directly inputting a numerical value on the screen shown in FIG. 5. At this time, the injection molding apparatus 70 can actually clamp the first mold 81 and the second mold 82 with the magnetic clamp device 1, and display a value of the clamping force detected at the time of this trial clamping on the display 66 of the molding operating device 65. To realize this function, the molding controller 90 includes a clamping force display 96.

When setting a clamping force, an operator actually arranges the first mold 81 and the second mold 82 so as to be close to the first magnetic plate 6 and the second magnetic plate 7, and then instructs clamping force measurement by tapping a clamping force measurement button 104 in FIG. 5. Note that the injection molding apparatus 70 is already in a mold closing state in advance. In response to this operation, the molding controller 90 outputs a clamp command to the clamp controller 40 and causes the magnetic clamp device 1 to actually perform clamping. The clamping operation may be performed by manually operating the operation unit 62 of the clamp operating device 60 by an operator instead of being automatically performed as described above. After the magnetic clamp device 1 is switched from a release state to a lock state, the clamp controller 40 outputs the measured clamping force to the molding controller 90. The magnetic clamp device is switched to a release state immediately after switching to a lock state or at an appropriate timing thereafter.

The clamping force display 96 included in the molding controller 90 displays the acquired clamping force on the display 66 of the molding operating device 65. This example is shown in FIG. 8. An operator inputs a set value of the clamping force while referring to the displayed measured value of the clamping force after visually checking whether there is an abnormality in the clamp state of the first mold 81 and the second mold 82, etc.

In this case, the operator can register an appropriate set value of the clamping force in the injection molding apparatus 70 while referring to a measured value obtained by actually measuring the clamping force.

When a mold has a complex shape, it is difficult to accurately estimate a clamping force from its outer shape. According to this embodiment, since the clamping force can be set while referring to actually measured clamping values, setting mistakes can be reliably reduced.

A measured value copy button may be provided on the screen of FIG. 8. When the operator taps the measured value copy button, a measured value of the clamping force is copied to an input field of a set value of the clamping force. At the same time as the clamping force is measured, the measured clamping force may be automatically copied to an input field of a set value of the clamping force.

As described above, the injection molding apparatus 70 of this embodiment performs injection molding in a state where the mold is clamped by the magnetic clamp device 1. The injection molding apparatus 70 includes the molding operating device 65 and the molding controller 90. The molding operating device 65 allows preliminary registration of at least one of a clamping force by the magnetic clamp device 1 and an abnormality determination threshold value regarding the clamping force, for each of a plurality of molds (that is, each of a plurality of combinations of the first mold 81 and the second mold 82). The molding controller 90 controls the injection molding operation. The molding controller 90 includes a clamp state determiner 94. The clamp state determiner 94 performs abnormality determination of the clamping force before the injection molding operation based on the registered clamping force and the clamping force measured at the time of clamping, when the mold is clamped by the magnetic clamp device 1.

Thus, an abnormality of the clamping force leading to falling of the mold can be detected before starting injection molding. Since a plurality of clamping forces or abnormality determination threshold values can be registered for each of a plurality of molds, criteria for abnormality determination of the clamping force can be easily changed with replacement of the mold.

In the injection molding apparatus 70 of this embodiment, the molding operating device 65 allows preliminary registration of at least one of the clamping force and the abnormality determination threshold value together with information regarding the mold. The molding operating device 65 is capable of being operated to select a mold to be clamped from the molds preliminarily registered before clamping the mold. The clamp state determiner 94 performs abnormality determination of the clamping force based on a clamping force or an abnormality determination threshold value stored corresponding to the mold that is selected.

Thus, criteria for abnormality determination of the clamping force can be automatically set by selection of the mold, so that setting mistakes can be prevented.

In the injection molding apparatus 70 of this embodiment, the molding controller 90 includes a clamping force display 96. When registering the clamping force, the magnetic clamp device 1 is made to clamp the mold, and the clamping force display 96 displays a measured value of the clamping force measured while the mold is clamped.

Thus, an operator can set a clamping force or an abnormality determination threshold value for clamping the mold in the injection molding apparatus 70 with reference to the actually measured clamping force. Therefore, criteria for abnormality determination of the clamping force can be appropriately determined.

In the injection molding apparatus 70 of this embodiment, the molding operating device 65 allows preliminary registration of the clamping force and the molding condition together with the information regarding the mold. The molding conditions include at least a resin temperature.

Thus, the molding condition including criteria for abnormality determination of the clamping force can be registered in an organized form, and the injection molding apparatus 70 can be operated according to the condition.

In the injection molding apparatus 70 of this embodiment, the molding controller 90 includes an alarm unit 95 that generates an alarm when the clamp state determiner 94 determines that the clamping force is abnormal.

Thus, an operator can notice early a situation where an abnormality has occurred in the clamping force.

In the injection molding apparatus 70 of this embodiment, the magnetic clamp device 1 clamps a mold on each of the fixed side and the movable side. Abnormality determination of the clamping force by the clamp state determiner 94 is performed for each of the fixed side and the movable side. When it is determined by the clamp state determiner 94 that the clamping force is abnormal on only one of the fixed side and the movable side, a warning message 120 displayed by the alarm unit 95 includes information indicating which of the fixed side and the movable side has an abnormality in the clamping force.

Thus, an operator can easily understand where an abnormality has occurred in the clamping force, on the fixed side or the movable side.

Although preferred embodiments of the present invention have been described above, the above configuration can be changed as follows, for example. Changes may be made alone, or a plurality of changes may be arbitrarily combined.

On the registration screens shown in FIGS. 5 and 8, instead of the clamping force, an abnormality determination threshold value of the clamping force may be set by an operator. In this case, the clamp state determiner 94 determines the presence or absence of an abnormality in the clamping force by comparing the clamping force measured in the magnetic clamp device 1 and a set abnormality determination threshold value.

After registration of the clamping force is performed, the molding controller 90 may command the magnetic clamp device 1 to actually perform clamping, and the clamp state determiner 94 may determine whether the measured clamping force is insufficient with respect to the registered clamping force, and a determination result may be displayed on the display 66 of the molding operating device 65. In this case, when there is a mistake in setting the clamping force, an operator can notice early.

The alarm unit 95 may generate an alarm by sounding a not-shown buzzer included in the injection molding apparatus 70, for example.

The clamp state determiner 94 may determine whether the clamping force is excessive instead of or in addition to insufficiency of the clamping force, and the alarm unit 95 may generate an alarm when it is excessive. In this configuration, for example, when a mold selected by an operator on the screen of FIG. 6 does not match a mold actually attached to the injection molding apparatus 70, it is possible to increase opportunities for the operator to notice.

As long as the clamping force can be preliminarily registered in plurality, it may be registered without accompanying information regarding the mold or without accompanying other molding conditions such as resin temperature. The same applies to a configuration that registers an abnormality determination threshold value of the clamping force.

A function of measuring and displaying a clamping force when registering a clamping force or an abnormality determination threshold value may be omitted.

The injection molding apparatus 70 may be configured so as to be able to start injection molding while maintaining a lock state in the magnetic clamp device 1 after the above-mentioned trial clamping.

The molding controller 90 may include an interlock controller. This interlock controller performs control to prevent the injection molding operation of the injection molding apparatus 70 when the clamp state determiner 94 determines that there is an abnormality in the clamping force measured by the magnetic clamp device 1 at the time of mold attachment. Interlock control can be realized, for example, by disabling the injection molding start button 121 in FIG. 7.

The molding controller 90 may include a function of determining whether a registered clamping force or a measured clamping force is appropriate with reference to other molding conditions. For example, if a set value of a mold opening force among molding conditions exceeds a set value of a clamping force, there is a high possibility that the first mold 81 or the second mold 82 will drop accompanying the mold opening operation. Also, if a set value of an ejector protrusion force among molding conditions exceeds a set value of a clamping force on the movable side, there is a high possibility that the second mold 82 will drop accompanying the operation of the ejector device 76. The molding controller 90 checks such inappropriately set conditions in advance, and performs interlock control to generate an alarm by the alarm unit 95 or prevent the injection molding operation when necessary. Thereby, dropping of the mold can be prevented beforehand.

### Description of Reference Numerals

1 magnetic clamp device
65 molding operating device
70 injection molding apparatus
90 molding controller (controller)
81, 82 mold

## Claims

1. An injection molding apparatus that performs injection molding in a state where a mold is clamped by a magnetic clamp device, comprising:
a molding operating device that allows preliminary registration of at least one of a clamping force by the magnetic clamp device and an abnormality determination threshold value regarding the clamping force, for each of a plurality of molds; and
a controller that controls an injection molding operation,
wherein
the controller includes a clamp state determiner,
the clamp state determiner performs abnormality determination of the clamping force before the injection molding operation based on the clamping force or the abnormality determination threshold value that is registered and a clamping force measured at a time of clamping, when the mold is clamped by the magnetic clamp device.

2. The injection molding apparatus according to claim 1, wherein
the molding operating device allows preliminary registration of at least one of the clamping force and the abnormality determination threshold value together with information regarding the mold,
the molding operating device is capable of being operated to select a mold to be clamped from the mold preliminarily registered before clamping the mold, and
the clamp state determiner performs the abnormality determination of the clamping force based on the clamping force or the abnormality determination threshold value stored corresponding to the mold that is selected.

3. The injection molding apparatus according to claim 2, wherein
the controller includes a clamping force display, and
when registering at least one of the clamping force and the abnormality determination threshold value, the magnetic clamp device is made to clamp the mold, and the clamping force display displays a measured value of the clamping force measured while the mold is clamped.

4. The injection molding apparatus according to claim 2, wherein
the molding operating device allows preliminary registration of at least one of the clamping force and the abnormality determination threshold value, and a molding condition, together with information regarding the mold, and
the molding condition includes at least one of a resin temperature, a mold temperature, and a filling pressure.

5. The injection molding apparatus according to claim 1, wherein
the controller includes an alarm unit that generates an alarm when the clamp state determiner determines that the clamping force is abnormal.

6. The injection molding apparatus according to claim 5, wherein
the magnetic clamp device clamps the mold on each of a fixed side and a movable side,
the abnormality determination of the clamping force by the clamp state determiner is performed for each of the fixed side and the movable side, and
when the clamp state determiner determines that the clamping force is abnormal on only one of the fixed side and the movable side, the alarm generated by the alarm unit includes information indicating which of the fixed side and the movable side has an abnormality in the clamping force.
